# EUROPEAN PATENT APPLICATION

(11) **EP 3 720 209 A1**
(43) Date of publication of application: **07.10.2020**
(21) Application number: 17934739.8
(22) Date of filing: 14.12.2017
(51) Int. Cl.: H04W 72/04

(54) **WIRELESS COMMUNICATION METHOD, TERMINAL AND NETWORK DEVICE**

(71) Applicant: GUANGDONG OPPO MOBILE TELECOMMUNICATIONS CORP., LTD., Wusha, Chang'an Dongguan, Guangdong 523860 (CN)
(72) Inventor: CHEN, Wenhong, Dongguan, Guangdong 523860 (CN); SHI, Zhihua, Dongguan, Guangdong 523860 (CN)
(74) Representative: Novagraaf Technologies
(86) International application number: PCT/CN2017/116237
(87) International publication number: WO 2019/113898

(57) **Abstract**

Provided in an embodiment of the present application are a wireless communication method, a terminal, and a network device, which may increase communication flexibility in terms of sounding reference signal (SRS) transmission. The method comprises: a terminal receiving an SRS scheduling signaling that is sent by a network device; according to the SRS scheduling signaling, determining a target SRS resource from a target SRS resource set, the periodicity of the target SRS resource being configured to correspond to the type of the SRS scheduling signaling; and transmitting an SRS on the target SRS resource.

## Description

### TECHNICAL FIELD

The present application relates to the field of communications, and more particularly, to a wireless communication method, a terminal, and a network device.

### BACKGROUND

In New Radio (NR) system, a terminal can send a sounding reference signal (SRS) to a network device. The network device can implement various functions based on the SRS, for example, perform beam management and obtain Channel State Information (CSI) and so on.

In the NR system, there is a high requirement for communication flexibility.

Therefore, how to improve the flexibility of communication in terms of SRS transmission is an urgent problem.

### SUMMARY

The embodiments of the present application provide a wireless communication method and device, which can improve communication flexibility in terms of SRS transmission.

In a first aspect, a wireless communication method is provided, including:
a terminal receiving an SRS scheduling signaling sent by a network device;
according to the SRS scheduling signaling, determining a target SRS resource from a target SRS resource set, periodicity configuration of the target SRS resource being correspond to a type of the SRS scheduling signaling;
transmitting an SRS on the target SRS resource.

With reference to the first aspect, in a possible implementation manner of the first aspect, the method further includes:
receiving, by the terminal, configuration information sent by the network device, wherein the configuration information is used to configure the target SRS resource set.

With reference to the first aspect or any one of the foregoing possible implementation manners, in another possible implementation of the first aspect, the receiving, by the terminal, the configuration information sent by the network device includes:
receiving, by the terminal, the configuration information sent by the network device through a radio resource control (RRC) signaling.

With reference to the first aspect or any one of the foregoing possible implementations, in another possible implementation of the first aspect, at least one of following parameters of different SRS resources in the target SRS resource set is same:
transmission power control parameters, transmission bandwidth parameters, a number of antenna ports, a number of orthogonal frequency division multiplexed (OFDM) symbols occupied in one time slot, a number of signal repetitions in one time slot, function configurations, and transmission time slots.

With reference to the first aspect or any one of the foregoing possible implementation manners, in another possible implementation of the first aspect, the target SRS resource set includes at least two of following periodically configured resources:
a resource for periodic SRS transmission, a resource for semi-persistent SRS transmission, and a resource for aperiodic SRS transmission.

With reference to the first aspect or any one of the foregoing possible implementation manners, in another possible implementation of the first aspect, the SRS scheduling signaling is a following type of scheduling signaling:
a scheduling signaling for triggering aperiodic SRS transmission, or a scheduling signaling for activating semi-persistent SRS transmission.

With reference to the first aspect or any one of the foregoing possible implementation manners, in another possible implementation of the first aspect, when the SRS scheduling signaling is the scheduling signaling for triggering aperiodic SRS transmission, the SRS scheduling signaling is carried by a downlink control information (DCI); or,
when the SRS scheduling signaling is the scheduling signaling for activating semi-persistent SRS transmission, the SRS scheduling signaling is carried by a media access control (MAC) control element (CE).

With reference to the first aspect or any one of the foregoing possible implementation manners, in another possible implementation of the first aspect, when the SRS scheduling signaling is the scheduling signaling for triggering aperiodic SRS transmission, the target SRS resource is the resource for aperiodic SRS transmission in the target SRS resource set, or the target SRS resource is the resource for aperiodic SRS transmission and the resource for semi-persistent SRS transmission in the target SRS resource set.

With reference to the first aspect or any of the foregoing possible implementation manners, in another possible implementation manner of the first aspect, the transmitting the SRS on the target SRS resource includes:
performing aperiodic SRS transmission on the target SRS resource.

With reference to the first aspect or any one of the foregoing possible implementation manners, in another possible implementation of the first aspect, if the target SRS resource is the resource for aperiodic SRS transmission, the transmitting the SRS on the target SRS resource includes:
if a time domain resource of the target SRS resource overlaps with a time domain resource of the resource for periodic SRS transmission or the resource for semi-persistent SRS transmission, or a time-frequency resource of the target SRS resource overlaps with a time-frequency resource of the resource for periodic SRS transmission or the resource for semi-persistent SRS transmission, the terminal performs SRS transmission on overlapped resources according to parameter configuration of the target SRS resource.

With reference to the first aspect or any one of the foregoing possible implementation manners, in another possible implementation of the first aspect, when the SRS scheduling signaling is the scheduling signaling for activating semi-persistent SRS transmission, the target SRS resource is the resource for semi-persistent SRS transmission, or the target SRS resource is the resource for aperiodic SRS transmission and the resource for semi-persistent SRS transmission.

With reference to the first aspect or any of the foregoing possible implementation manners, in another possible implementation manner of the first aspect, the transmitting the SRS on the target SRS resource includes:
performing semi-persistent SRS transmission on the target SRS resource.

With reference to the first aspect or any one of the foregoing possible implementation manners, in another possible implementation of the first aspect, the method further includes:
stopping, by the terminal, performing SRS transmission on the target SRS resource, if the terminal receives a signaling for deactivating semi-persistent SRS transmission sent by the network device.

With reference to the first aspect or any one of the foregoing possible implementation manners, in another possible implementation of the first aspect, the scheduling signaling is used to instruct SRS transmission by using SRS resources in the target SRS resource set.

With reference to the first aspect or any of the foregoing possible implementation manners, in another possible implementation manner of the first aspect, the scheduling signaling is used to instruct SRS transmission by using SRS resources in a plurality of SRS resource sets, the plurality of SRS resource sets including the target SRS resource set.

In a second aspect, a wireless communication method is provided, including:
sending, by a network device, a sounding reference signal (SRS) scheduling signaling to a terminal;
determining, by the network device, a target SRS resource in a target SRS resource set, and periodicity configuration of the target SRS resource being correspond to type of the SRS scheduling signaling;
receiving, by the network device, an SRS on the target SRS resource.

With reference to the second aspect, in a possible implementation manner of the second aspect, the method further includes:
sending, by the network device, configuration information to the terminal, wherein the configuration information is used to configure the target SRS resource set.

With reference to the second aspect or any of the foregoing possible implementation manners, in another possible implementation manner of the second aspect, at least one of following parameters included in different SRS resources in the target SRS resource set is same:
transmission power control parameters, transmission bandwidth parameters, a number of antenna ports, a number of orthogonal frequency division multiplexed (OFDM) symbols occupied in one time slot, a number of signal repetitions in one time slot, function configurations, and transmission time slots.

With reference to the second aspect or any one of the foregoing possible implementation manners, in another possible implementation of the second aspect, the target SRS resource set includes at least two of following periodically configured resources:
a resource for periodic SRS transmission, a resource for semi-persistent SRS transmission, and a resource for aperiodic SRS transmission.

With reference to the second aspect or any one of the foregoing possible implementation manners, in another possible implementation of the second aspect, when the SRS scheduling signaling is a scheduling signaling for triggering aperiodic SRS transmission, the target SRS resource is the resource for aperiodic SRS transmission in the target SRS resource set, or the target SRS resource is the resource for aperiodic SRS transmission and the resource for semi-persistent SRS transmission in the target SRS resource set.

With reference to the second aspect or any one of the foregoing possible implementation manners, in another possible implementation of the second aspect, when the SRS scheduling signaling is a scheduling signaling for activating semi-persistent SRS transmission, the target SRS resource is the resource for semi-persistent SRS transmission, or the target SRS resource is the resource for aperiodic SRS transmission and the resource for semi-persistent SRS transmission.

According to a third aspect, a terminal is provided to execute the foregoing first aspect or the method in any possible implementation manner of the first aspect. Specifically, the terminal includes a unit for performing the foregoing first aspect or the method in any possible implementation manner of the first aspect.

According to a fourth aspect, a network device is provided for performing the foregoing second aspect or the method in any possible implementation manner of the second aspect. Specifically, the network device includes a unit for performing the foregoing second aspect or the method in any possible implementation manner of the second aspect.

According to a fifth aspect, a terminal is provided. The terminal includes: a memory, a processor, an input interface, and an output interface. Wherein the memory, the processor, the input interface and the output interface are connected through a bus system. The memory is configured to store instructions, and the processor is configured to execute the instructions stored in the memory, and configured to execute the foregoing first aspect or a method in any possible implementation manner of the first aspect.

According to a sixth aspect, a network device is provided. The network device includes: a memory, a processor, an input interface, and an output interface. Wherein, the memory, the processor, the input interface and the output interface are connected through a bus system. The memory is used to store instructions, and the processor is used to execute the instructions stored in the memory, and used to execute the second aspect or the method in any possible implementation manner of the second aspect.

According to a seventh aspect, a computer storage medium is provided for storing computer software instructions for executing any one of the foregoing aspects or the methods in any possible implementation manner of any aspect, and includes programs designed to execute the foregoing aspects.

According to an eighth aspect, a computer program product including instructions is provided, which when executed on a computer, causes the computer to execute the method in any one of the foregoing aspects or any optional implementation manner of any aspect.

Therefore, in the embodiment of the present application, the periodicity configuration of the target SRS resource selected for SRS transmission from the SRS resource set correspond to the types of the SRS scheduling signaling, and it can realize the flexible support of transmission of SRS signals with different periodicity through one SRS resource set.

### BRIEF DESCRIPTION OF THE DRAWINGS

FIG. 1 is a schematic diagram of a wireless communication system according to an embodiment of the present application.
FIG. 2 is a schematic flowchart of a wireless communication method according to an embodiment of the present application.
FIG. 3 is a schematic block diagram of a terminal according to an embodiment of the present application.
FIG. 4 is a schematic block diagram of a network device according to an embodiment of the present application.
FIG. 5 is a schematic block diagram of a system chip according to an embodiment of the present application.
FIG. 6 is a schematic block diagram of a communication device according to an embodiment of the present application.

### DETAILED DESCRIPTION

The technical solutions in the embodiments of the present application will be described below with reference to the drawings in the embodiments of the present application.

The technical solutions of the embodiments of the present application can be applied to various communication systems, for example, a Global System of Mobile communication (GSM) system, and a Code Division Multiple Access (CDMA) System, a Wideband Code Division Multiple Access (WCDMA) system, General Packet Radio Service (GPRS), a Long Term Evolution (LTE) system, an LTE Frequency Division Duplex (FDD) system, LTE Time Division Duplex (TDD), a Universal Mobile Telecommunication System (UMTS), a Worldwide Interoperability for Microwave Access (WiMAX) communication system or a future 5G system.

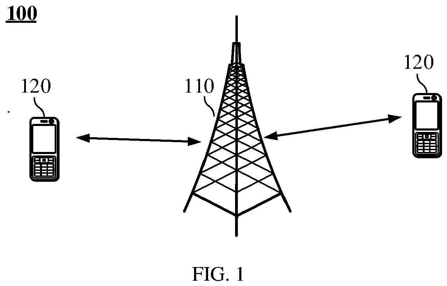

FIG. 1 shows a wireless communication system 100 applied in an embodiment of the present application. The wireless communication system 100 may include a network device 110. The network device 100 may be a device that communicates with a terminal device. The network device 100 may provide communication coverage for a specific geographic area, and may communicate with a terminal device (such as a UE) located within the coverage area. Optionally, the network device 100 may be a Base Transceiver Station (BTS) in a GSM system or a CDMA system, a NodeB (NB) in a WCDMA system, or an Evolutional Node B (eNB or eNodeB) in an LTE system., or a wireless controller in a Cloud Radio Access Network (CRAN), or the network device may be a relay station, an access point, an in-vehicle device, a wearable device, network-side equipment in the future 5G network or network equipment in a future evolved Public Land Mobile Network (PLMN).

The wireless communication system 100 further includes at least one terminal device 120 located within a coverage area of the network device 110. The terminal device 120 may be mobile or fixed. Optionally, the terminal device 120 may refer to an access terminal, a user equipment (UE), a user unit, a user station, a moving station, a mobile station, a remote station, a remote terminal, a mobile device, a user terminal, a terminal, a wireless communication device, a user agent, or a user device. The access terminal can be a cell phone, a cordless phone, a Session Initiation Protocol (SIP) phone, a Wireless Local Loop (WLL) station, a Personal Digital Assistant (PDA), a handheld device with wireless communication function, a computing device or other processing devices connected to a wireless modem, an in-vehicle device, a wearable device, a terminal device in future 5G networks, or a terminal device in future evolved PLMNs.

Optionally, the terminal device 120 may performs terminal-to-device (D2D) communication.

Optionally, the 5G system or network may also be referred to as a new radio (NR) system or network.

FIG. 1 exemplarily shows one network device and two terminal devices. Optionally, the wireless communication system 100 may include a plurality of network devices and coverage range of each of the network devices may include other number of terminal devices. This application example does not limit this.

In the wireless communication system 100, the terminal device may have one or more antenna array blocks for uplink data transmission, and each of the antenna array blocks has an independent radio frequency channel. One demodulation reference signal (DMRS) port group corresponds to one antenna array block. After determining transmission parameters of one antenna array block, the terminal device can transmit data of the corresponding DMRS port group on this antenna array block.

Optionally, the wireless communication system 100 may further include other network entities such as a network controller, a mobility management entity, and the like. This embodiment of the present application is not limited thereto.

It should be understood that the terms "system" and "network" are often used interchangeably herein. The term "and/or" in this document is only a kind of association relationship describing related objects, which means that there can be three kinds of relationships, for example, A and/or B can mean: A exists alone, A and B exist simultaneously, and B exists alone of these three cases. In addition, the character "/" in this article generally indicates that the related objects are an "or" relationship.

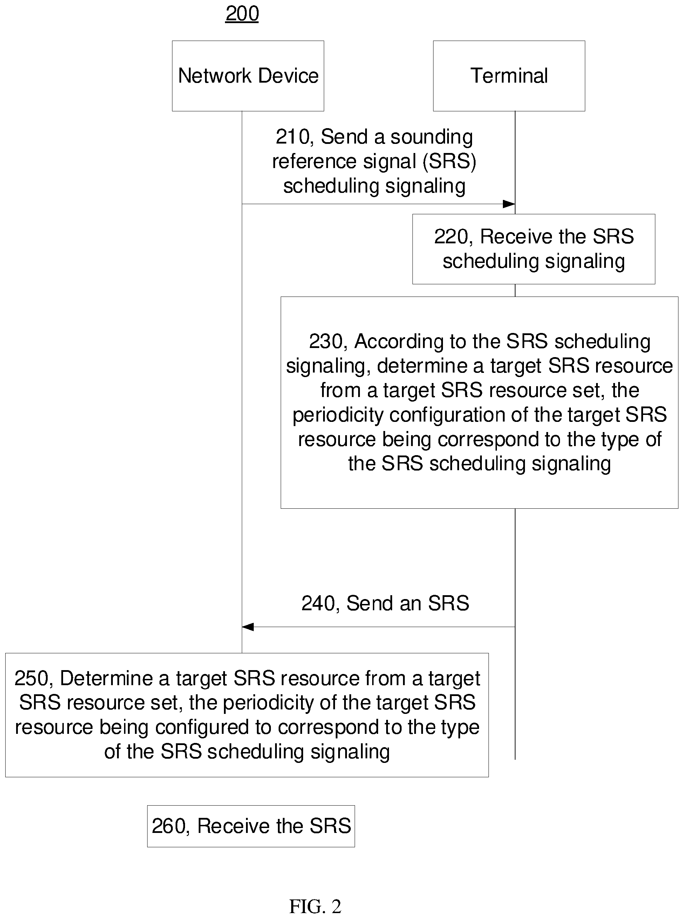

FIG. 2 is a schematic flowchart of a wireless communication method 200 according to an embodiment of the present application. The method 200 includes at least a part of following contents.

In 210, a network device sends an SRS scheduling signaling to a terminal.

Optionally, the SRS scheduling signaling is the following types of scheduling signaling: a scheduling signaling for triggering aperiodic SRS transmission, or a scheduling signaling for activating semi-persistent SRS transmission.

The aperiodic SRS transmission refers to that when a terminal receives an SRS scheduling signaling, it can perform aperiodic SRS transmission in one time slot.

The semi-continuous SRS transmission means that after receiving the SRS scheduling signaling, the terminal can periodically perform SRS transmission until it receives a corresponding deactivation signaling.

In addition to the aperiodic SRS transmission and the semi-persistent SRS transmission, the SRS transmission in the embodiment of the present application may also be periodic SRS transmission, that is, the terminal may perform periodic SRS transmission on the periodic SRS resource without activating or triggering scheduling signaling.

Optionally, when the SRS scheduling signaling is the scheduling signaling for triggering aperiodic SRS transmission, the SRS scheduling signaling is carried by Downlink Control Information (DCI); or, when the SRS scheduling signaling is the scheduling signaling for activating semi-persistent SRS transmission, the SRS scheduling signaling is carried by a Media Access Control (MAC) Control Element (CE).

In 220, the terminal receives the SRS scheduling signaling sent by the network device.

In 230, the terminal determines a target SRS resource in the target SRS resource set according to the SRS scheduling signaling, and periodicity configuration of the target SRS resource correspond to a type of the SRS scheduling signaling.

Optionally, the network device sends configuration information to the terminal, wherein the configuration information is used to configure the target SRS resource set, and the terminal receives the configuration information sent by the network device, so that the configuration of the target SRS resource set can be determined.

Optionally, the network device sends the configuration information through a radio resource control (Radio Resource Control, RRC) signaling.

It should be understood that the SRS resource set in the embodiment of the present application may be preset on the terminal, or may be configured to the terminal by other methods.

Optionally, the target SRS resource set includes at least two of the following periodically configured resources: resources for periodic SRS transmission, resources for semi-persistent SRS transmission, and resources for aperiodic SRS transmission.

Specifically, the SRS resources in the SRS resource set may have different time domain configurations. For example, some resources are the periodic SRS resource, some resources are the semi-persistent SRS resource, and some resources are the aperiodic SRS resource.

In addition, a network side can independently indicate different periodicity configuration for different SRS resources in the SRS resource set, so the periodicity configuration of different SRS resources can be same or different.

For example, the SRS resource set includes four SRS resources, of which one is a periodic SRS resource, one is a semi-persistent SRS resource, and two are aperiodic SRS resources.

The SRS resources with different periodicity configuration may partially overlap or all overlap.

Optionally, each of the SRS resources in the SRS resource set mentioned in the embodiments of the present application may have independent configuration parameter compared to other SRS resources, for example, having independent SRS sending period, independent SRS triggering method, and independent transmission beam, or a number of independent SRS transmissions when the SRS is triggered to be transmitted.

Optionally, at least one of following parameters of different SRS resources in the target SRS resource set is same:
transmission power control parameters, transmission bandwidth parameters, a number of antenna ports, a number of Orthogonal Frequency Division Multiplexing (OFDM) symbols occupied in one time slot, number of signal repetitions in one time slot, function configurations, and transmission time slots.

Optionally, the target SRS resource set may be configured in two ways so that at least one parameter of the SRS resources therein is same.

In an implementation manner, the network device configures the at least one parameter for the SRS resource set, and all of the SRS resources in the set adopt the at least one parameter, that is, the at least one parameter is separately configured for each set.

In another implementation manner, the network device configures each of the SRS resources in the SRS resource set with the at least one parameter, but parameters of different SRS resource configurations are same.

The transmission bandwidth parameters mentioned in the embodiments of the present application may include SRS frequency domain hopping configuration parameters and the like.

The functional configurations mentioned in the embodiments of the present application may indicate application scenarios (purposes) of SRS resources, including but not limited to: used for beam management, used for obtaining CSI, used for antenna switching, used for codebook-based precoding, and used for non-codebook-based precoding.

The transmission time slots of different SRS resources in the SRS resource set mentioned in the embodiments of the present application may be same, which may indicate that: the SRS resource set only occupies a same time slot in a transmission cycle, and does not occupy a plurality of time slots, and for example, the SRS resources in the SRS resource set use a same transmission cycle and time slot offset.

Optionally, the SRS scheduling signaling in the embodiment of the present application is used to instruct SRS transmission by using the SRS resources in the target SRS resource set.

Optionally, the scheduling signaling is used to instruct SRS transmission by using SRS resources in a plurality of SRS resource sets, and the plurality of SRS resource sets include the target SRS resource set.

Specifically, the SRS scheduling signaling may trigger aperiodic SRS transmission on at least one SRS resource set, and the at least one SRS resource set includes the target SRS resource set. Alternatively, the SRS scheduling signaling may activate semi-persistent SRS transmission on at least one SRS resource set, and the at least one SRS resource set includes the target SRS resource set.

For example, the SRS scheduling signaling is an activating signaling and includes 4 bits, each bit corresponding to an SRS resource set, and an activated SRS resource set is indicated by a bitmap.

For example, the SRS scheduling signaling is a trigger signaling and includes two DCI bits, wherein different indication value of one bit is used to trigger different SRS resource sets, and different indication value of the other bit is used to indicate whether to trigger or not trigger the aperiodic SRS transmission.

Optionally, when the SRS scheduling signaling is the scheduling signaling for triggering aperiodic SRS transmission, the target SRS resource is the resource for aperiodic SRS transmission in the target SRS resource set.

Specifically, when the SRS scheduling signaling received by the terminal is used to trigger the aperiodic SRS transmission, the resource for aperiodic SRS transmission can be configured as a target SRS resource in the target SRS resource set, thereby achieving the aperiodic SRS transmission.

Optionally, when the SRS scheduling signaling is the scheduling signaling for triggering aperiodic SRS transmission, the target SRS resource is the resource for aperiodic SRS transmission and the resource for semi-persistent SRS transmission in the target SRS resource set.

Specifically, when the SRS scheduling signaling received by the terminal is used to trigger the aperiodic SRS transmission, the resource for aperiodic SRS transmission and the resource for semi-persistent SRS transmission are configured as the target SRS resource, and thus the aperiodic SRS transmission is achieved.

Optionally, when the SRS scheduling signaling is the scheduling signaling for activating semi-persistent SRS transmission, the target SRS resource is the resource for semi-persistent SRS transmission.

Specifically, when the SRS scheduling signaling received by the terminal is used to activate the qsemi-persistent SRS transmission, the resource for semi-persistent SRS transmission is configured as the target SRS resource, and thus the semi-persistent SRS transmission is achieved.

Optionally, when the SRS scheduling signaling is the scheduling signaling for activating semi-persistent SRS transmission, the target SRS resource is the resource for aperiodic SRS transmission and the resource for semi-persistent SRS transmission.

Specifically, when the SRS scheduling signaling received by the terminal is used to activate the semi-persistent SRS transmission, the resource for aperiodic SRS transmission and the resource for semi-persistent SRS transmission is configured as the target SRS resource, and thus the semi-continuous SRS transmission is achieved.

In 240, the terminal transmits an SRS on the target SRS resource.

Optionally, when the SRS scheduling signaling is used to trigger the aperiodic SRS transmission, the aperiodic SRS transmission is performed on the target SRS resource.

For example, the SRS resource set includes 4 SRS resources, and periodicity configuration of 2 SRS resources are aperiodic, and the terminal transmits the SRS corresponding to the trigger signaling on the 2 SRS resources.

Optionally, if the target SRS resource is the resource for aperiodic SRS transmission, on the target SRS resource, if the time domain resource of the target SRS resource overlaps with the time domain resource of the resource for periodic SRS transmission or the resource for semi-persistent SRS, or the time-frequency resource of the target SRS resources overlaps with the time-frequency resources of the resource for periodic SRS transmission or the resource for semi-persistent SRS transmission, the terminal performs SRS transmission on the overlapped resources according to parameter configuration of the target SRS resource.

For example, if an aperiodic SRS resource conflicts with a periodic SRS resource, the triggered aperiodic SRS resource has a higher priority than the periodic SRS resource, and the SRS transmission should be performed according to configuration of aperiodic SRS resource, and conflicting periodic SRS should be discarded.

Optionally, when the SRS scheduling signaling is used to activate the semi-persistent SRS, the semi-persistent SRS transmission is performed on the target SRS resource.

Optionally, if the terminal receives a deactivation signaling of the semi-persistent SRS transmission sent by the network device, the terminal stops performing the SRS transmission on the target SRS resource.

For example, the SRS resource set includes 4 SRS resources, and periodicity configuration of one of the SRS resources are semi-persistent. The terminal transmits only the SRS corresponding to the activation signaling on this SRS resource until the deactivation signaling of the SRS resource set is received.

In 250, in the target SRS resource set, the network device determines the target SRS resource, and periodicity configuration of the target SRS resource correspond to the type of SRS scheduling signaling.

In the target SRS resource set, the manner in which the network device determines the target SRS resource can refer to the description on the terminal side, and will not be repeated here.

In 260, the network device receives the SRS on the target SRS resource.

Therefore, in the embodiment of the present application, the periodicity configuration of the target SRS resource selected for SRS transmission from the SRS resource set correspond to the type of the SRS scheduling signaling, and it is possible to flexibly support transmission of SRS signals with different periodicities through one SRS resource set.

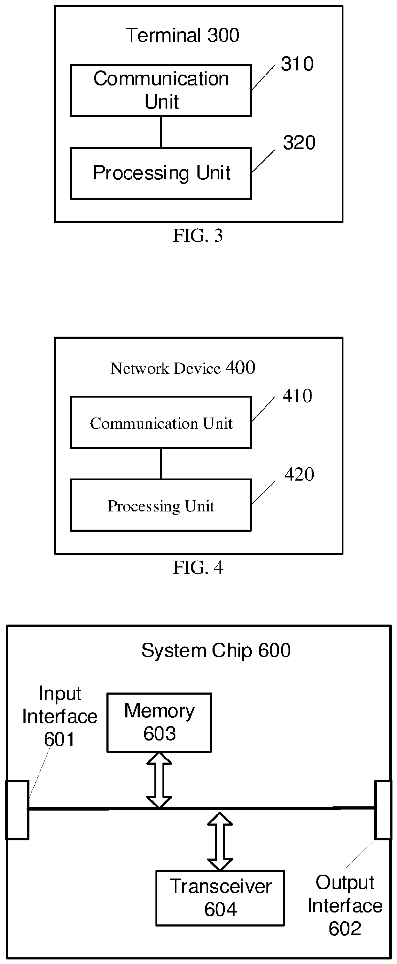

FIG. 3 is a schematic diagram of a terminal 300 according to an embodiment of the present application. As shown in FIG. 3, the terminal 300 includes a communication unit 310 and a processing unit 310; wherein,
the communication unit 310 is configured to: receive a sounding reference signal (SRS) scheduling signaling sent by a network device;
the processing unit 320 is configured to determine a target SRS resource in a target SRS resource set according to the SRS scheduling signaling, and periodicity configuration of the target SRS resource correspond to the type of the SRS scheduling signaling;
the communication unit 310 is further configured to transmit an SRS on the target SRS resource.

Optionally, the communication unit 310 is further configured to receive configuration information sent by the network device, wherein the configuration information is used to configure the target SRS resource set.

Optionally, the communication unit 310 is further configured to:
receive the configuration information sent by the network device through a radio resource control (RRC) signaling.

Optionally, at least one of following parameters of different SRS resources in the target SRS resource set is same:
transmission power control parameters, transmission bandwidth parameters, a number of antenna ports, a number of orthogonal frequency division multiplexed (OFDM) symbols occupied in one time slot, a number of signal repetitions in one time slot, function configurations, and transmission time slots.

Optionally, the target SRS resource set includes at least two of following periodically configured resources:
a resource for periodic SRS transmission, a resource for semi-persistent SRS transmission, and a resource for aperiodic SRS transmission.

Optionally, the SRS scheduling signaling is following types of scheduling signaling:
a scheduling signaling for triggering aperiodic SRS transmission, or a scheduling signaling for activating semi-persistent SRS transmission.

Optionally, when the SRS scheduling signaling is the scheduling signaling for triggering aperiodic SRS transmission, the SRS scheduling signaling is carried by downlink control information (DCI); or
when the SRS scheduling signaling is the scheduling signaling for activating semi-persistent SRS transmission, the SRS scheduling signaling is carried by a media access control (MAC) control unit (CE).

Optionally, when the SRS scheduling signaling is the scheduling signaling for triggering aperiodic SRS transmission, the target SRS resource is the resource for aperiodic SRS transmission in the target SRS resource set, or the target SRS resources are the resource for aperiodic SRS transmission and the resource for semi-persistent SRS transmission in the target SRS resource set.

Optionally, the communication unit 310 is further configured to:
perform aperiodic SRS transmission on the target SRS resource.

Optionally, if the target SRS resource is the resource for aperiodic SRS transmission, the transmitting SRS on the target SRS resource includes:
if a time domain resource of the target SRS resource overlaps with a time domain resource of the resource for periodic SRS transmission or the resource for semi-persistent SRS transmission, or a time-frequency resource of the target SRS resource overlaps with a time-frequency resources of the resource for periodic SRS transmission or the resource for semi-persistent SRS transmission, and the terminal performs the SRS transmission on the overlapped resources according to parameter configuration of the target SRS resource.

Optionally, when the SRS scheduling signaling is the scheduling signaling for activating semi-persistent SRS transmission, the target SRS resource is the resource for semi-persistent SRS transmission, or the target SRS resource is the resource for aperiodic SRS transmission and the resource for semi-persistent SRS transmission.

Optionally, the communication unit 310 is further configured to:
perform the semi-persistent SRS transmission on the target SRS resource.

Optionally, the communication unit 310 is further configured to:
stop the SRS transmission on the target SRS resource, if a deactivation signaling of the semi-persistent SRS transmission sent by the network device is received.

Optionally, the scheduling signaling is used to instruct SRS transmission by using SRS resources in the target SRS resource set.

Optionally, the scheduling signaling is used to instruct SRS transmission by using SRS resources in a plurality of SRS resource sets, and the plurality of SRS resource sets include the target SRS resource set.

It should be understood that the terminal 300 according to the embodiment of the present application may correspond to the terminal in the method embodiment of the present application, and the above and other operations and/or functions of each unit in the terminal 300 are to implement the corresponding process of the terminal in the method 200. For brevity, details are not described herein again.

FIG. 4 is a schematic block diagram of a network device 400 according to an embodiment of the present application. The network device 400 includes a communication unit 410 and a processing unit 420; wherein,
the communication unit 410 is configured to: send a sounding reference signal (SRS) scheduling signaling to a terminal;
the processing unit 420 is configured to determine a target SRS resource in a target SRS resource set, and periodicity configuration of the target SRS resource correspond to a type of the SRS scheduling signaling;
the communication unit 410 is further configured to receive an SRS on the target SRS resource.

Optionally, the communication unit 410 is further configured to:
send configuration information to the terminal, where the configuration information is used to configure the target SRS resource set.

Optionally, at least one of following parameters included in different SRS resources in the target SRS resource set are same:
transmission power control parameters, transmission bandwidth parameters, a number of antenna ports, a number of orthogonal frequency division multiplexed (OFDM) symbols occupied in a time slot, a number of signal repetitions in a time slot, function configurations, and transmission time slots.

Optionally, the target SRS resource set includes at least two of following periodically configured resources:
a resource for periodic SRS transmission, a resource for semi-persistent SRS transmission, and a resource for aperiodic SRS transmission.

Optionally, when the SRS scheduling signaling is a scheduling signaling for triggering aperiodic SRS transmission, the target SRS resource is the resource for aperiodic SRS transmission in the target SRS resource set, or the target SRS resources are the resource for aperiodic SRS transmission and the resource for semi-persistent SRS transmission in the target SRS resource set.
optionally, when the SRS scheduling signaling is the scheduling signaling for activating semi-persistent SRS transmission, the target SRS resource is the resource for semi-persistent SRS transmission, or the target SRS resource is the resource for aperiodic SRS transmission and the resource for semi-persistent SRS transmission.

It should be understood that the network device 400 according to the embodiment of the present application may correspond to the network device in the method embodiment of the present application, and the above and other operations and/or functions of each unit in the network device 400 are respectively to implement the corresponding process of the network device in the method 200 shown in FIG. 2, which is not repeated for brevity.

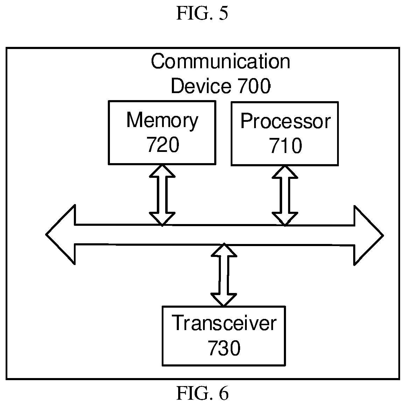

FIG. 5 is a schematic structural diagram of a system chip 600 according to an embodiment of the present application. The system chip 600 in FIG. 5 includes an input interface 601, an output interface 602, a processor 603, and a memory 604. The processor 603 is configured to execute codes in the memory 604 through an internal communication connection line.

Optionally, when the code is executed, the processor 603 implements the method executed by the terminal device in the method embodiment. For brevity, details are not described herein again.

Optionally, when the codes are executed, the processor 603 implements the method executed by the network in the method embodiment. For brevity, details are not described herein again.

FIG. 6 is a schematic block diagram of a communication device 700 according to an embodiment of the present application. As shown in FIG. 6, the communication device 700 includes a processor 710 and a memory 720. The memory 720 may store program code, and the processor 710 may execute the program codes stored in the memory 720.

Optionally, as shown in FIG. 6, the communication device 700 may include a transceiver 730, and the processor 710 may control the transceiver 730 to communicate externally.

Optionally, the processor 710 may call the program code stored in the memory 720 to perform the corresponding operations of the terminal device in the method embodiment. For brevity, details are not described herein again.

Optionally, the processor 710 may call the program code stored in the memory 720 to perform the corresponding operation of the network device in the method embodiment. For brevity, details are not described herein again.

It should be understood that the processor in the embodiment of the present application may be an integrated circuit chip and has a signal processing capability. In the implementation process, each step of the foregoing method embodiment may be completed by using an integrated logic circuit of hardware in a processor or an instruction in a form of software. The above processor may be a general-purpose processor, a digital signal processor (DSP), an application specific integrated circuit (ASIC), an Field Programmable Gate Array (FPGA), or other programming logic devices, discrete gate or transistor logic devices, and discrete hardware components. Various methods, steps, and logical block diagrams disclosed in the embodiments of the present application can be implemented or executed. A general-purpose processor may be a microprocessor or the processor may be any conventional processor or the like. The steps of the method disclosed in combination with the embodiments of the present application may be directly implemented by a hardware decoding processor, or may be performed by using a combination of hardware and software modules in the decoding processor. The software module may be located in a mature storage medium such as a random access memory, a flash memory, a read-only memory, a programmable read-only memory, or an electrically erasable programmable memory, a register, and the like. The storage medium is located in a memory, and the processor reads the information in the memory and completes the steps of the foregoing method in combination with its hardware.

It can be understood that the memory in the embodiment of the present application may be a volatile memory or a non-volatile memory, or may include both volatile and non-volatile memory. Wherein, the non-volatile memory may be a read-only memory (ROM), a Programmable ROM (PROM), an Erasable PROM (EPROM), an Electrically EPROM (EEPROM) or a flash memory. The volatile memory may be a Random Access Memory (RAM), which is used as an external cache. By way of example, but not limitation, many forms of RAM are available, such as a static random access memory (SRAM), a dynamic random access memory (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memory of the systems and methods described herein is intended to include, but is not limited to, these and any other suitable types of memory.

Those of ordinary skill in the art may realize that the units and algorithm steps of each example described in connection with the embodiments disclosed herein can be implemented by electronic hardware, or a combination of computer software and electronic hardware. Whether these functions are performed in hardware or software depends on the specific application and design constraints of the technical solution. Professional technicians can use different methods to implement the described functions for each specific application, but such implementation should not be considered to be beyond the scope of this application.

Those skilled in the art can clearly understand that, for the convenience and brevity of description, the specific working processes of the systems, devices, and units described above can refer to the corresponding processes in the foregoing method embodiments, and are not repeated here.

In the several embodiments provided in this application, it should be understood that the disclosed systems, devices, and methods may be implemented in other ways. For example, the device embodiments described above are only schematic. For example, the division of the unit is only a logical function division. In actual implementation, there may be another division manner. For example, multiple units or components may be combined or can be integrated into another system, or some features can be ignored or not implemented. In addition, the displayed or discussed mutual coupling or direct coupling or communication connection may be indirect coupling or communication connection through some interfaces, devices or units, which may be electrical, mechanical or other forms.

The units described as separate components may or may not be physically separated, and the components displayed as units may or may not be physical units, may be located in one place, or may be distributed on multiple network units. Some or all of the units may be selected according to actual needs to achieve the objective of the solution of this embodiment.

In addition, each functional unit in each embodiment of the present application may be integrated into one processing unit, or each of the units may exist separately physically, or two or more units may be integrated into one unit.

If the functions are implemented in the form of software functional units and sold or used as independent products, they can be stored in a computer-readable storage medium. Based on this understanding, the technical solution of this application is essentially a part that contributes to the existing technology or a part of the technical solution can be embodied in the form of a software product. The computer software product is stored in a storage medium, including several instructions are used to cause a computer device (which may be a personal computer, a server, or a network device, etc.) to perform all or part of the steps of the method described in each embodiment of the present application. The foregoing storage media include: U disks, mobile hard disks, Read-Only Memory (ROM), Random Access Memory (RAM), magnetic disks or optical disks, and other media that can store program codes.

The above is only a specific implementation of this application, but the scope of protection of this application is not limited to this. Any person skilled in the art can easily think of changes or replacements within the technical scope disclosed in this application. It should be covered by the protection scope of this application. Therefore, the protection scope of this application shall be subject to the protection scope of the claims.

## Claims

1. A wireless communication method, comprising:
receiving, by a terminal, an SRS scheduling signaling sent by a network device;
determining, according to the SRS scheduling signaling, a target SRS resource from a target SRS resource set, periodicity configuration of the target SRS resource being correspond to a type of the SRS scheduling signaling; and
transmitting an SRS on the target SRS resource.

2. The method according to claim 1, wherein, the method further comprises:
receiving, by the terminal, configuration information sent by the network device, wherein the configuration information is used to configure the target SRS resource set.

3. The method according to claim 2, wherein, the receiving, by the terminal, the configuration information sent by the network device comprises:
receiving, by the terminal, the configuration information sent by the network device through a radio resource control (RRC) signaling.

4. The method according to any one of claims 1 to 3, wherein, at least one of following parameters of different SRS resources in the target SRS resource set is same:
transmission power control parameters, transmission bandwidth parameters, a number of antenna ports, a number of orthogonal frequency division multiplexed (OFDM) symbols occupied in one time slot, a number of signal repetitions in one time slot, function configurations, and transmission time slots.

5. The method according to any one of claims 1 to 4, wherein, the target SRS resource set comprises at least two of following periodically configured resources:
a resource for periodic SRS transmission, a resource for semi-persistent SRS transmission, and a resource for aperiodic SRS transmission.

6. The method according to any one of claims 1 to 5, wherein, the SRS scheduling signaling is a following type of scheduling signaling:
a scheduling signaling for triggering aperiodic SRS transmission, or a scheduling signaling for activating semi-persistent SRS transmission.

7. The method according to claim 6, wherein, when the SRS scheduling signaling is the scheduling signaling for triggering aperiodic SRS transmission, the SRS scheduling signaling is carried by a downlink control information (DCI); or,
when the SRS scheduling signaling is the scheduling signaling for activating semi-persistent SRS transmission, the SRS scheduling signaling is carried by a media access control (MAC) control element (CE).

8. The method according to any one of claims 1 to 6, wherein, when the SRS scheduling signaling is the scheduling signaling for triggering aperiodic SRS transmission, the target SRS resource is the resource for aperiodic SRS transmission in the target SRS resource set, or the target SRS resource is the resource for aperiodic SRS transmission and the resource for semi-persistent SRS transmission in the target SRS resource set.

9. The method according to claim 8, wherein, the transmitting the SRS on the target SRS resource comprises:
performing aperiodic SRS transmission on the target SRS resource.

10. The method according to claim 8, wherein, if the target SRS resource is the resource for aperiodic SRS transmission, the transmitting the SRS on the target SRS resource comprises:
if a time domain resource of the target SRS resource overlaps with a time domain resource of the resource for periodic SRS transmission or the resource for semi-persistent SRS transmission, or a time-frequency resource of the target SRS resource overlaps with a time-frequency resource of the resource for periodic SRS transmission or the resource for semi-persistent SRS transmission, performing, by the terminal, SRS transmission on overlapped resources according to parameter configuration of the target SRS resource.

11. The method according to any one of claims 1 to 6, wherein, when the SRS scheduling signaling is the scheduling signaling for activating semi-persistent SRS transmission, the target SRS resource is the resource for semi-persistent SRS transmission, or the target SRS resource is the resource for aperiodic SRS transmission and the resource for semi-persistent SRS transmission.

12. The method according to claim 11, wherein, the transmitting the SRS on the target SRS resource comprises:
performing semi-persistent SRS transmission on the target SRS resource.

13. The method according to claim 11 or claim 12, wherein, the method further comprises:
stopping, by the terminal, performing SRS transmission on the target SRS resource, if the terminal receives a signaling for deactivating semi-persistent SRS transmission sent by the network device.

14. The method according to any one of claims 1 to 13, wherein, the scheduling signaling is used to instruct SRS transmission by using SRS resources in the target SRS resource set.

15. The method according to claim 14, wherein, the scheduling signaling is used to instruct SRS transmission by using SRS resources in a plurality of SRS resource sets, the plurality of SRS resource sets comprising the target SRS resource set.

16. A wireless communication method, comprising:
sending, by a network device, a sounding reference signal (SRS) scheduling signaling to a terminal;
determining, by the network device, a target SRS resource in a target SRS resource set, and periodicity configuration of the target SRS resource being correspond to type of the SRS scheduling signaling; and
receiving, by the network device, an SRS on the target SRS resource.

17. The method according to claim 16, wherein, the method further comprises:
sending, by the network device, configuration information to the terminal, wherein the configuration information is used to configure the target SRS resource set.

18. The method according to claim 16 or claim 17, wherein, at least one of following parameters comprised in different SRS resources in the target SRS resource set is same:
transmission power control parameters, transmission bandwidth parameters, a number of antenna ports, a number of orthogonal frequency division multiplexed (OFDM) symbols occupied in one time slot, a number of signal repetitions in one time slot, function configurations, and transmission time slots.

19. The method according to any one of claims 16 to 18, wherein, the target SRS resource set comprises at least two of following periodically configured resources:
a resource for periodic SRS transmission, a resource for semi-persistent SRS transmission, and a resource for aperiodic SRS transmission.

20. The method according to any one of claims 16 to 19, wherein, when the SRS scheduling signaling is a scheduling signaling for triggering aperiodic SRS transmission, the target SRS resource is the resource for aperiodic SRS transmission in the target SRS resource set, or the target SRS resource is the resource for aperiodic SRS transmission and the resource for semi-persistent SRS transmission in the target SRS resource set.

21. The method according to any one of claims 16 to 19, wherein, when the SRS scheduling signaling is a scheduling signaling for activating semi-persistent SRS transmission, the target SRS resource is the resource for semi-persistent SRS transmission, or the target SRS resource is the resource for aperiodic SRS transmission and the resource for semi-persistent SRS transmission.

22. A terminal, comprising a communication unit and a processing unit, wherein,
the communication unit is configured to receive a sounding reference signal (SRS) scheduling signaling sent by a network device;
the processing unit is configured to determine a target SRS resource in a target SRS resource set according to the SRS scheduling signaling, and periodicity configuration of the target SRS resource being correspond to type of the SRS scheduling signaling; and
the communication unit is further configured to transmit an SRS on the target SRS resource.

23. The terminal according to claim 22, wherein, the communication unit is further configured to receive configuration information sent by the network device, wherein the configuration information is used to configure the target SRS resource set.

24. The terminal according to claim 23, wherein, the communication unit is further configured to:
receive the configuration information sent by the network device through a radio resource control (RRC) signaling.

25. The terminal according to any one of claims 22 to 24, wherein, at least one of following parameters of different SRS resources in the target SRS resource set is same:
transmission power control parameters, transmission bandwidth parameters, a number of antenna ports, a number of orthogonal frequency division multiplexed (OFDM) symbols occupied in one time slot, a number of signal repetitions in one time slot, function configurations, and transmission time slots.

26. The terminal according to any one of claims 22 to 25, wherein, the target SRS resource set comprises at least two of following periodically configured resources:
a resource for periodic SRS transmission, a resource for semi-persistent SRS transmission, and a resource for aperiodic SRS transmission.

27. The terminal according to any one of claims 22 to 26, wherein, the SRS scheduling signaling is a following type of scheduling signaling:
a scheduling signaling for triggering aperiodic SRS transmission, or a scheduling signaling for activating semi-persistent SRS transmission.

28. The terminal according to claim 27, wherein, when the SRS scheduling signaling is the scheduling signaling for triggering aperiodic SRS transmission, the SRS scheduling signaling is carried by a downlink control information (DCI); or,
when the SRS scheduling signaling is the scheduling signaling for activating semi-persistent SRS transmission, the SRS scheduling signaling is carried by a media access control (MAC) control element (CE).

29. The terminal according to any one of claims 22 to 27, wherein, when the SRS scheduling signaling is the scheduling signaling for triggering aperiodic SRS transmission, the target SRS resource is the resource for aperiodic SRS transmission in the target SRS resource set, or the target SRS resource is the resource for aperiodic SRS transmission and the resource for semi-persistent SRS transmission in the target SRS resource set.

30. The terminal according to claim 29, wherein, the communication unit is further configured to:
perform aperiodic SRS transmission on the target SRS resource.

31. The terminal according to claim 29, wherein, if the target SRS resource is the resource for aperiodic SRS transmission, transmitting the SRS on the target SRS resource comprises:
if a time domain resource of the target SRS resource overlaps with a time domain resource of the resource for periodic SRS transmission or the resource for semi-persistent SRS transmission, or a time-frequency resource of the target SRS resource overlaps with a time-frequency resource of the resource for periodic SRS transmission or the resource for semi-persistent SRS transmission, performing, by the terminal, SRS transmission on overlapped resources according to parameter configuration of the target SRS resource.

32. The terminal according to any one of claims 22 to 27, wherein, when the SRS scheduling signaling is the scheduling signaling for activating semi-persistent SRS transmission, the target SRS resource is the resource for semi-persistent SRS transmission, or the target SRS resource is the resource for aperiodic SRS transmission and the resource for semi-persistent SRS transmission.

33. The terminal according to claim 32, wherein, the communication unit is further configured to:
perform semi-persistent SRS transmission on the target SRS resource.

34. The terminal according to claim 32 or claim 33, wherein, the communication unit is further configured to:
stop performing SRS transmission on the target SRS resource, if a signaling for deactivating semi-persistent SRS transmission sent by the network device is received.

35. The terminal according to any one of claims 22 to 34, wherein, the scheduling signaling is used to instruct SRS transmission by using SRS resources in the target SRS resource set.

36. The terminal according to claim 35, wherein, the scheduling signaling is used to instruct SRS transmission by using SRS resources in a plurality of SRS resource sets, the plurality of SRS resource sets comprising the target SRS resource set.

37. A network device, comprising a communication unit and a processing unit, wherein,
the communication unit is configured to send a sounding reference signal (SRS) scheduling signaling to a network device;
the processing unit is configured to determine a target SRS resource in a target SRS resource set and periodicity configuration of the target SRS resource being correspond to type of the SRS scheduling signaling; and
the communication unit is further configured to receive an SRS on the target SRS resource.

38. The network device according to claim 37, wherein, the communication unit is further configured to: send configuration information to the terminal, wherein the configuration information is used to configure the target SRS resource set.

39. The network device according to claim 37 or claim 38, wherein, at least one of following parameters comprised in different SRS resources in the target SRS resource set is same:
transmission power control parameters, transmission bandwidth parameters, a number of antenna ports, a number of orthogonal frequency division multiplexed (OFDM) symbols occupied in one time slot, a number of signal repetitions in one time slot, function configurations, and transmission time slots.

40. The network device according to any one of claims 37 to 39, wherein, the target SRS resource set comprises at least two of following periodically configured resources:
a resource for periodic SRS transmission, a resource for semi-persistent SRS transmission, and a resource for aperiodic SRS transmission.

41. The network device according to any one of claims 37 to 40, wherein, when the SRS scheduling signaling is a scheduling signaling for triggering aperiodic SRS transmission, the target SRS resource is the resource for aperiodic SRS transmission in the target SRS resource set, or the target SRS resource is the resource for aperiodic SRS transmission and the resource for semi-persistent SRS transmission in the target SRS resource set.

42. The network device according to any one of claims 37 to 40, wherein, when the SRS scheduling signaling is a scheduling signaling for activating semi-persistent SRS transmission, the target SRS resource is the resource for semi-persistent SRS transmission, or the target SRS resource is the resource for aperiodic SRS transmission and the resource for semi-persistent SRS transmission.
